# EUROPEAN PATENT APPLICATION

(11) **EP 3 518 171 A1**
(43) Date of publication of application: **31.07.2019**
(21) Application number: 17849102.3
(22) Date of filing: 07.09.2017
(51) Int. Cl.: G06Q 50/10, G08B 25/14, G08B 21/18, G08B 27/00, G05B 23/02, H04N 7/18, G06F 15/16

(54) **SYSTEM AND METHOD FOR MONITORING PLANT FACILITIES USING ACTIVE BLACK BOX**

(30) Priority: 08.09.2016 KR 20160115318
(71) Applicant: Jin, Lee Jin, Gwangju 62249 (KR); Lee, Seong Mi, Gwangju 62249 (KR)
(72) Inventor: Jin, Lee Jin, Gwangju 62249 (KR); Lee, Seong Mi, Gwangju 62249 (KR)
(74) Representative: Lichti - Patentanwälte Partnerschaft mbB
(86) International application number: PCT/KR2017/009821
(87) International publication number: WO 2018/048218

(57) **Abstract**

The present invention relates to a system and a method for monitoring factory facilities using an active black box, in which the active black box transmits, to a central control server located at a remote site, data collected from a CCTV, a temperature/humidity sensor, an illuminance sensor and a CO₂ sensor that are connected to the factory facilities; the central control server monitoring the collected data controls the factory facilities in real-time; big data generated by accumulating the data collected in real-time through the active black box is stored in a cloud server to manage a response manual according to an occurrence of an event; and this big data is available to a maintenance company. Accordingly, the present invention is capable of real-time response even if a manager is not on-site at the time of occurrence of an event, and has an effect of providing optimal maintenance for factory facilities.

## Description

### Technical Field:

The present invention relates to a system and a method for monitoring factory facilities using an active black box, and more specifically, to a technique of monitoring factory facilities using an active black box, in which a central control server monitors an operation situation of a factory facility in real-time through a data received from an active black box provided in the factory facility (confirms general working information and statistics of machines (machine states, production, alarm information and tool information)), i.e., confirms images of equipment and inside of a factory in real-time, confirms the status and trends in the changes of temperature and humidity, and monitors air quality, and as the central control server monitoring the situation remotely controls the factory facility, an event may be handled promptly when the event occurs.

### Background Art:

Generally, industrial management through a network is limited to part of the section, and accordingly, general management on industrial facilities is not accomplished, and thus human resources are wasted in the overall system management of the industrial facilities.

In addition, as the overall control on the industrial facilities is accomplished through human resources, real-time control is difficult, and generation of abnormal symptoms in the industrial facilities is not prevented in advance, and accordingly, there is a problem in that it is difficult to immediately handle a disaster, a defect or a risk caused by the operation of the industrial facilities.

To solve this problem, a monitoring system through a network is used in a factory or an industrial site to monitor the facilities or equipment. Since a manager may be relieved from the inconvenience of residing in the field and the overall situation of the site may be monitored and controlled from a central control room, this may increase efficiency in time and space. In addition, since it is possible to integrate and manage environments or restricted areas that are difficult for people to access, importance of the system increases greatly.

To solve the problems as described above, Korean Laid-opened Patent No. 2016-0034023 (opened on March 23, 2016, "Web monitoring system based on Internet") is disclosed as a prior art.

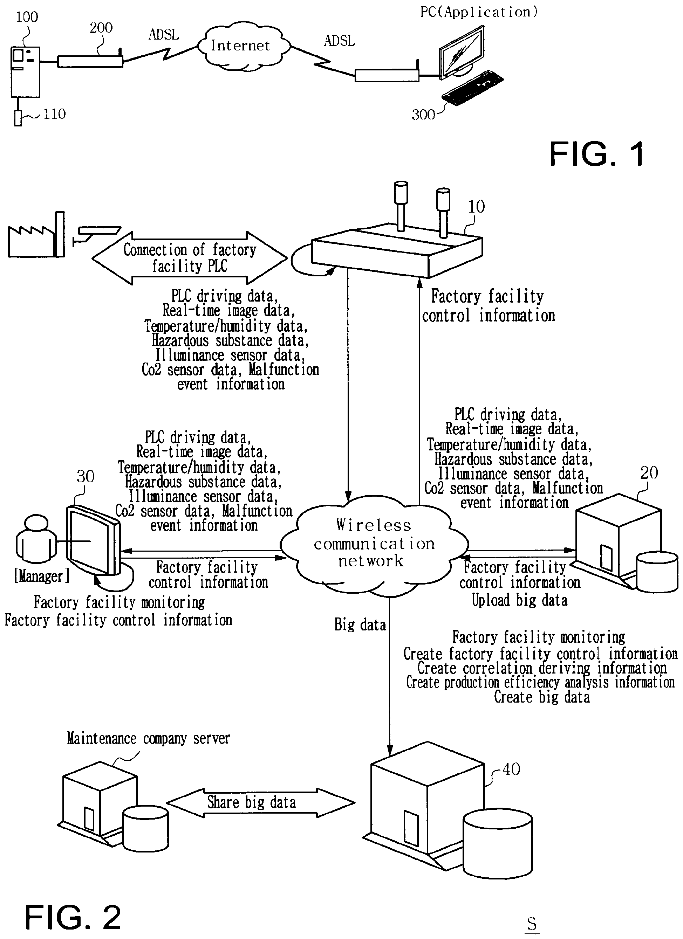

Referring to FIG. 1, the prior art is a technique of providing a plurality of measurement devices for measuring a state of a target device in an industrial site through a sensor; a plurality of serial gateways connected to the measurement devices to convert data measured by the measurement devices to provide the data to a user connected through the Internet; and a user terminal for outputting the data that the user receives by connecting to the serial gateways through the Internet.

However, in the case of the prior art, since measurement data for a target device in an industrial site is simply provided to a user terminal located at a remote site, the user terminal is limited only to one-sided reception of the measurement data, and thus when a malfunction occurs in the target device or a defect occurs in a product, the user terminal only recognizes the malfunction or the defect, and the manager may only passively handle the situation in the end.

### Disclosure of Invention:

### Technical Problem:

An object of the present invention is to provide a system and a method for monitoring factory facilities using an active black box, in which as the active black box transmits data collected from a CCTV, a temperature/ humidity sensor, an illuminance sensor and a CO₂ sensor connected to the factory facilities to a central control server located at a remote site, and the central control server monitoring the data controls the factory facilities in real-time, an event (a disaster, a malfunction or a product defect according to operation of the factory facilities) may be handled in real-time even if a manager is not on-site when the event occurs.

Another object of the present invention is to provide a system and a method for monitoring factory facilities using an active black box, in which as big data created by accumulating the data collected in real-time through the active black box is stored in a cloud server to manage a response manual according to occurrence of an event and allow a maintenance company to use the big data, an optimal maintenance may be provided for the factory facilities.

### Technical Solution:

To accomplish the above objects, according to one aspect of the present invention, there is provided a factory facility monitoring system using an active black box, the system including: the active black box for collecting PLC driving data of a factory facility, collecting real-time image data from a CCTV connected to photograph an operation state of the factory facility, collecting temperature/humidity data, illuminance sensor data and CO₂ sensor data of the factory facility from a temperature/humidity sensor, an illuminance sensor and a CO₂ sensor and transmitting the collected data to a central control server, and controlling PLC driving of a factory facility corresponding to an ID when factory facility control information including the ID is received from the central control server or a mobile terminal; the central control server for receiving the PLC driving data, the real-time image data, the temperature/humidity data, the illuminance sensor data, the CO₂ sensor data and hazardous substance data, and monitoring time-series changes in the trend of the data by the ID of each factory facility, wherein when malfunction event information or line state event information is received from the active black box, the central control server indexes a preset manual and transmits factory facility control information corresponding to the received malfunction event information or line state event information to the active black box; and a mobile terminal for receiving the PLC driving data, the real-time image data, the temperature/humidity data, the illuminance sensor data, the CO₂ sensor data and the hazardous substance data of the ID of each factory facility from the central control server, and monitoring time-series changes in the trend of the data, wherein when the malfunction event information or the line state event information is received, the mobile terminal outputs location coordinates of a factory facility, an equipment name and an equipment operating state corresponding to the information and transmits factory facility control information received from a manager to the active black box.

In addition, the central control server classifies the malfunction event information or the line state event information received from the active black box by the ID, creates big data integrating a cause/frequency of event generation and maintenance history, and uploads the big data on a cloud server.

In addition, the factory facility monitoring system further includes a cloud server for managing a response manual according to big data received from the central control server and generation of an event and allowing utilization of the collected big data for maintenance of the factory facility by sharing the big data with a maintenance company server.

In addition, the active black box includes: the temperature/humidity sensor for collecting real-time temperature/humidity data of the factory facility; a gas sensor for collecting the hazardous substance data including any one among smog, methane and carbon mono-oxide discharged by operation of the factory facility; and a line sensor for transmitting, when it is sensed that a driving path of the factory facility or a product manufactured by the factory facility deviates from a preset line, line state event information including an ID corresponding to the line to the central control sensor or the mobile terminal.

In addition, the active black box further includes: the illuminance sensor for collecting the illuminance sensor data integrating illuminance values of lights provided inside the factory facility or in a transfer path of the product; and the CO₂ sensor for collecting the CO₂ sensor data integrating CO₂ values generated when the factory facility operates.

In addition, the central control server includes: a collection module for receiving the PLC driving data, the real-time image data, the temperature/humidity data, the illuminance sensor data, the CO₂ sensor data and the hazardous substance data of the ID of each factory facility from the active black box and storing and managing the received data, and storing and managing the malfunction event information or the line state event information received from the active black box by the ID of each factory facility; a monitoring module for outputting time-series changes in the trend of the PLC driving data, the real-time image data, the temperature/humidity data, the illuminance sensor data, the CO₂ sensor data and the hazardous substance data received from the collection module by the ID of each factory facility, and outputting an event alarm and transmitting to a preset mobile terminal, when the malfunction event information or the line state event information is received from the collection module factory; a control module for creating, when the malfunction event information or the line state event information is received from the collection module, factory facility control information for PLC driving control including any one among interrupting an operation of a corresponding factory facility, resuming the operation of the factory facility, repeatedly executing previous processes, and skipping subsequent processes in accordance with the preset manual; a search module for searching for, when the malfunction event information or the line state event information is received from the collection module, location coordinates of previously registered mobile terminals, and extracting an ID of a mobile terminal located at a place nearest from the factory facility; and a transmission module for transmitting the PLC driving data, the real-time image data, the temperature/humidity data, the illuminance sensor data, the CO₂ sensor data and the hazardous substance data by the ID of each factory facility received from the collection module to a previously registered mobile terminal, transmitting the factory facility control information received from the control module to the active black box, and transmitting the malfunction event information or the line state event information received from the collection module to a mobile terminal corresponding to the ID received from the search module.

In addition, the central control server further includes: a quality correlation deriving module for indexing each non-defective product rate of products produced by a plurality of factory facilities located in the same area from a DB, comparing and analyzing the indexed non-defective product rates and the illuminance sensor data and the CO₂ sensor data of the ID of each factory facility received from the collection module, and creating correlation deriving information, which derives an environmental factor that gives an effect to the non-defective product rate, on the basis of the illuminance sensor data and the CO₂ sensor data; and a production efficiency analysis module for indexing production quality data of a product produced by each factory facility from a DB, comparing the indexing production quality data with the temperature/humidity data, the illuminance sensor data, the CO₂ sensor data and the hazardous substance data received from the collection module, and creating production efficiency analysis information which derives a factory facility, a production process and a production line having an optimum production efficiency.

In addition, the mobile terminal includes: a reception module for receiving the PLC driving data, the real-time image data, the temperature/humidity data, the illuminance sensor data, the CO₂ sensor data and the hazardous substance data of the ID of each factory facility from the central control server, and receiving the malfunction event information or the line state event information from the central control server; a monitoring module for outputting time-series changes in the trend of the PLC driving data, the real-time image data, the temperature/humidity data, the illuminance sensor data, the CO₂ sensor data and the hazardous substance data received from the reception module by the ID of each factory facility, and outputting an event alarm when the malfunction event information or the line state event information is received from the reception module; a control module for creating, when the malfunction event information or the line state event information is received from the reception module, factory facility control information for PLC driving control including any one among interrupting an operation of a corresponding factory facility, resuming the operation of the factory facility, repeatedly executing previous processes, and skipping subsequent processes in accordance with the preset manual; and a transmission module for transmitting the factory facility control information received from the control module to the active black box.

Meanwhile, a factory facility monitoring method using an active black box of the present invention based on the system as described above includes: step (a) of collecting PLC driving data, real-time image data, temperature/ humidity data, illuminance sensor data, CO₂ sensor data and hazardous substance data of a factory facility, and transmitting the collected data to a central control server, by the active black box; step (b) of receiving the PLC driving data, the real-time image data, the temperature/humidity data, the illuminance sensor data, the CO₂ sensor data and the hazardous substance data, and monitoring time-series changes in the trend of the data by the ID of each factory facility, by the central control server; step (c) of determining whether the central control server receives malfunction event information or line state event information from the active black box; step (d) of indexing, if it is determined that the malfunction event information or the line state event information is received as a result of the determination at step (c), a preset manual and transmitting factory facility control information corresponding to the received malfunction event information or line state event information to the active black box, by the central control server; step (e) of determining whether the active black box receives the factory facility control information including an ID from the central control server; and step (f) of controlling, if it is determined that the factory facility control information including an ID is received from the central control server 20 as a result of the determination at step (e), PLC driving of a factory facility corresponding to the ID, by the active black box.

In addition, the factory facility monitoring method further includes, after step (d), step (g) of classifying the malfunction event information or the line state event information by the ID, creating big data integrating a cause/frequency of event generation and maintenance history, and uploading the big data on a cloud server, by the central control server.

In addition, the factory facility monitoring method further includes, after step (d), step (h) of receiving the PLC driving data, the real-time image data, the temperature/humidity data, the illuminance sensor data, the CO₂ sensor data and the hazardous substance data of the ID of each factory facility from the central control server, and monitoring time-series changes in the trend of the data, by the mobile terminal; step (i) of determining whether the mobile terminal receives the malfunction event information or the line state event information from the central control server; step (j) of outputting, if it is determined that the malfunction event information or the line state event information is received as a result of the determination at step (i), location coordinates of the factory facility, an equipment name and an equipment operating state corresponding to the received malfunction event information or line state event information, by the mobile terminal; step (k) of transmitting factory facility control information received from a manager to the active black box, by the mobile terminal; and step (1) of receiving the factory facility control information from the mobile terminal, and controlling PLC driving of the factory facility, by the active black box.

### Advantageous Effects:

According to the present invention, there is an effect of responding to an event (a disaster, a malfunction or a defect in production of products according to operation of factory facilities) in real-time even if a manager is not on-site when the event occurs, as an active black box transmits data collected from a CCTV, a temperature/ humidity sensor, an illuminance sensor and a CO₂ sensor connected to factory facilities to a central control server located at a remote site, and the central control server monitoring the factory facilities through the data controls the factory facilities in real-time.

In addition, according to the present invention, there is an effect of providing an optimal maintenance for factory facilities by storing big data created by accumulating the data collected in real-time through the active black box in a cloud server to manage a response manual according to occurrence of an event and allow a maintenance company to use the big data.

### Brief Description of the drawings:

FIG. 1 is a view showing a conventional integrated web monitoring system based on Internet.
FIG. 2 is a view showing the configuration of a factory facility monitoring system using an active black box according to the present invention.
FIG. 3 is a view showing the detailed configuration of an active black box of a factory facility monitoring system using the active black box according to the present invention.
FIG. 4 is a view showing the detailed configuration of a central control server of a factory facility monitoring system using an active black box according to the present invention.
FIGS. 5a to 5l are exemplary views showing UIs of a monitoring module provided in a central control server of a factory facility monitoring system using an active black box according to the present invention.
FIG. 6 is a view showing the detailed configuration of a mobile terminal of a factory facility monitoring system using an active black box according to the present invention.
FIG. 7 is an exemplary view showing a UI of a monitoring module provided in a mobile terminal of a factory facility monitoring system using an active black box according to the present invention.
FIG. 8 is a flowchart illustrating a factory facility monitoring method using an active black box according to the present invention.
FIG. 9 is a flowchart illustrating a process performed after step S40 of a factory facility monitoring method using an active black box according to the present invention.
FIG. 10 is a flowchart illustrating another process performed after step S40 of a factory facility monitoring method using an active black box according to the present invention.

### Best Mode for Carrying out the Invention:

The specific features and advantages of the present invention will become apparent from the following detailed description based on the accompanying drawings. Prior to this, the terms or words used in this specification and the claims should be interpreted as meanings and concepts meeting the technical ideas of the present invention based on the principles that can adequately define the concept of the terms so that the inventor can explain his or her invention in the best way. In addition, it should be noted that when it is determined that the detailed description of the known art related to the present invention and the configuration thereof may obscure the gist of the present invention, the detailed description thereof will be omitted.

As shown in FIG. 2, a factory facility monitoring system S using an active black box according to the present invention is configured to include the active black box 10, a central control server 20, a mobile terminal 30 and a cloud server 40, respectively connected through a wireless communication network.

First, the active black box 10 collects Programmable Logic Controller (PLC) driving data of a factory facility, collects real-time image data from a CCTV connected to photograph an operation state of the factory facility, collects real-time temperature/humidity data of the factory facility from a temperature/humidity sensor 11, collects hazardous substance data generated in the factory facility from a gas sensor 12, transmits the collected data to the central control server 20, and controls PLC driving of a factory facility corresponding to an identification ID when factory facility control information including the ID is received from the central control server 20 or the mobile terminal 30.

At this point, the PLC driving control may be any one among interrupting an operation of a factory facility corresponding to the ID, resuming the operation of the factory facility, repeated execution of previous processes, and skipping subsequent processes, and the PLC driving control of the present invention may vary in accordance with a preset manual.

In addition, when the factory facility performs an operation other than preset operations, the active black box 10 transmits malfunction event information or line state event information including an ID corresponding to the factory facility to the central control server 20.

Meanwhile, the central control server 20 receives the PLC driving data, the real-time image data, the temperature/humidity data and the hazardous substance data from the active black box 10 and monitors time-series changes in the trend of the data by the ID of each factory facility, and when the malfunction event information or the line state event information is received, the central control server 20 indexes the preset manual and transmits factory facility control information corresponding to the received malfunction event information or line state event information to the active black box 10.

In addition, the central control server 20 classifies the malfunction event information or the line state event information received from the active black box 10 by the ID, creates big data integrating the cause/frequency of event generation and maintenance history, and uploads the big data on the cloud server 40.

Meanwhile, the mobile terminal 30 receives the PLC driving data, the real-time image data, the temperature/humidity data and the hazardous substance data of the ID of each factory facility from the central control server 20 and monitors time-series changes in the trend of the data, and when the malfunction event information or the line state event information is received, the mobile terminal 30 outputs location coordinates of a factory facility, an equipment name and an equipment operating state corresponding to the information and transmits factory facility control information received from a manager to the active black box 10. Here, the factory facility control information is information for controlling PLC driving of the factory facility as described above.

Then, the cloud server 40 is configured to manage a response manual according to the event generation and the big data received from the central control server 20, and utilize the collected big data for maintenance of the factory facility by sharing the big data with a maintenance company server.

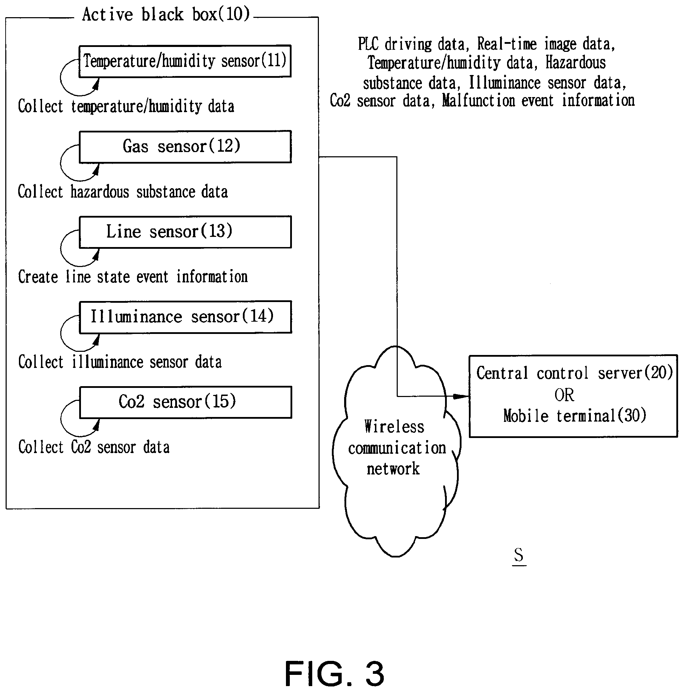

Hereinafter, the detailed configuration of an active black box of a factory facility monitoring system using an active black box according to the present invention will be described with reference to FIG. 3.

Specifically, the active black box 10 is connected to the PLC of each factory facility, and when the factory facility performs an operation other than preset operations, the active black box 10 transmits malfunction event information including an ID corresponding to the factory facility to the central control server 20 or the mobile terminal 30.

In addition, the temperature/humidity sensor 11 of the active black box 10 collects real-time temperature/humidity data of the factory facility, and although it is assumed that the temperature measurement range is -40°C to 80°C / 0.1°C with an error range of <±0.5°C, the temperature measurement range of the present invention is not limited thereto.

In addition, although it is assumed that the hazardous substance data collected by the gas sensor 12 of the active black box 10 includes any one among smog, methane and carbon mono-oxide discharged by the operation of the factory facility, the collection function of the gas sensor 12 of the present invention may be further changed to collect hazardous substances other than the smog, the methane and the carbon mono-oxide.

In addition, when it is sensed through a line sensor 13 that the driving path of the factory facility or a product manufactured by the factory facility deviates from a preset line, the active black box 10 transmits line state event information including an ID corresponding to the line to the central control sensor 20 or the mobile terminal 30.

In addition, the line sensor 13 of the active black box 10 may be configured to include an infrared sensor or decompression equipment for sensing whether a factory facility or a product manufactured by the factory facility deviates from a preset path.

In addition, an illuminance sensor 14 of the active black box 10 collects illuminance sensor data integrating illuminance values of lights provided inside the factory facility or in the transfer path of the product.

Then, a CO₂ sensor 15 of the active black box 10 collects CO₂ sensor data integrating CO₂ values generated when the factory facility operates.

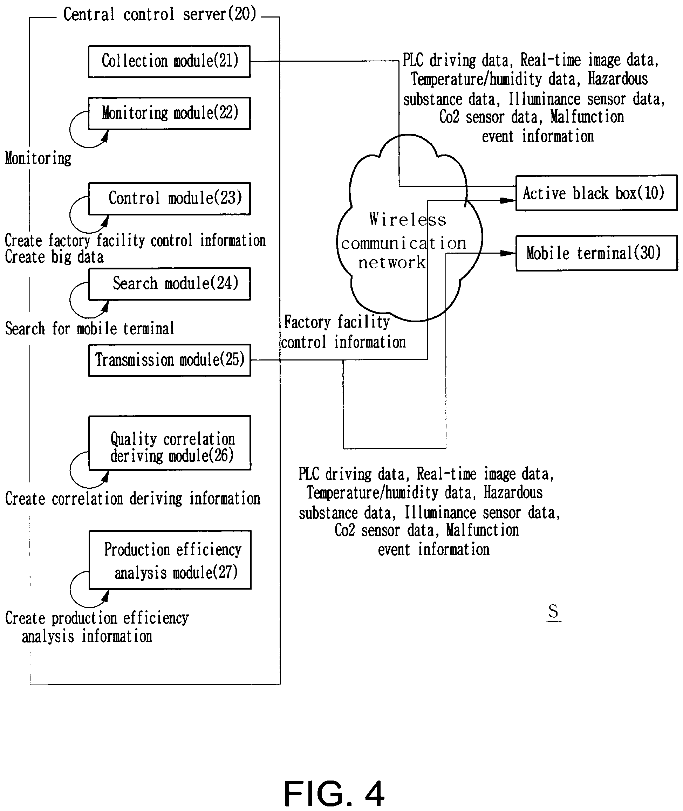

Hereinafter, the detailed configuration of a central control server of a factory facility monitoring system using an active black box according to the present invention will be described with reference to FIG. 4.

First, a collection module 21 of the central control server 20 receives PLC driving data, real-time image data, temperature/humidity data, illuminance sensor data, CO₂ sensor data and hazardous substance data of the ID of each factory facility from the active black box 10 and stores and manages the received data, and stores and manages malfunction event information or line state event information received from the active black box 10 by the ID of each factory facility.

In addition, a monitoring module 22 of the central control server 20 outputs time-series changes in the trend of the PLC driving data, the real-time image data, the temperature/humidity data, the illuminance sensor data, the CO₂ sensor data and the hazardous substance data received from the collection module 21 by the ID of each factory facility. And when the malfunction event information or the line state event information is received from the collection module 21, the monitoring module 22 outputs an event alarm for the event information and transmits to a preset mobile terminal 30.

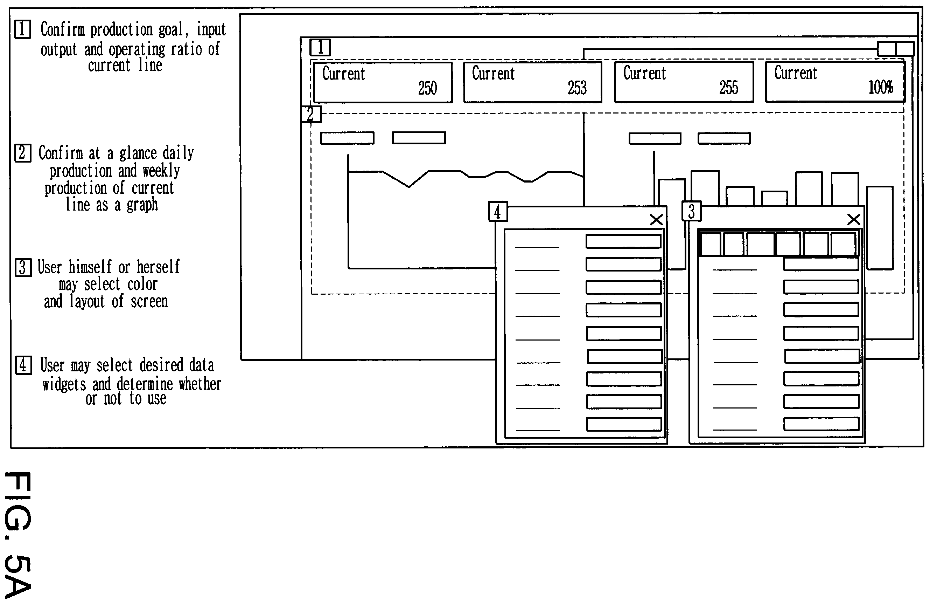

Hereinafter, output screens for monitoring factory facilities on the basis of PLC driving data through the monitoring module of the factory facility monitoring system using an active black box according to the present invention will be described with reference to FIGS. 5a to 5l.

First, the monitoring module 22 is driven to output comprehensive status information including a production goal, an input, an output, an operating ratio, daily production, weekly production, a TOP fault facility, TOP-5 alarms, and a maintenance call alarm list of a line by the ID of each factory facility, as shown in FIG. 5a on the basis of PLC driving data.

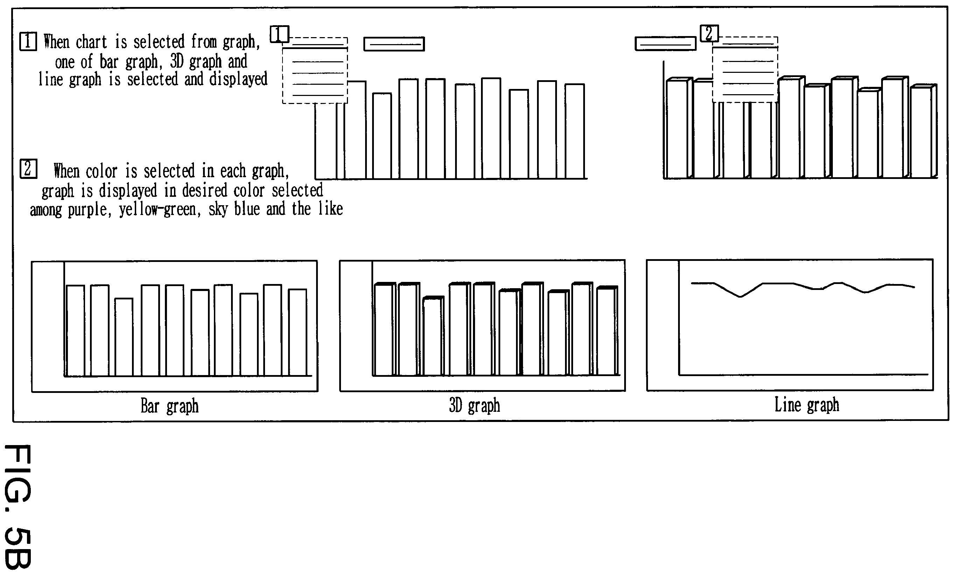

In addition, the monitoring module 22 is driven to output the comprehensive status information as a graph by the chart or color, as shown in FIG. 5b on the basis of PLC driving data.

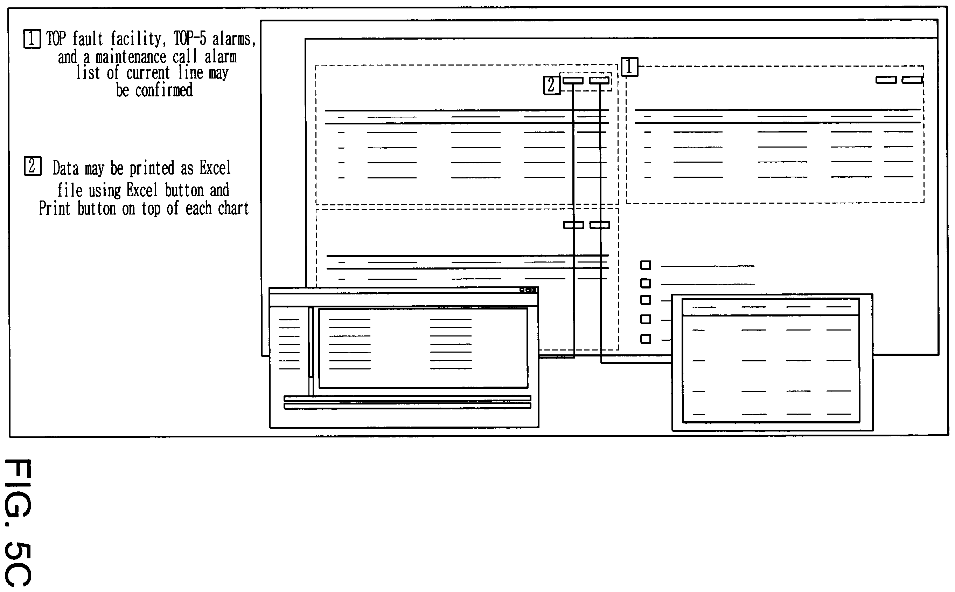

In addition, the monitoring module 22 is driven to store the comprehensive status information as an Excel file or output as a printed material, as shown in FIG. 5c on the basis of PLC driving data.

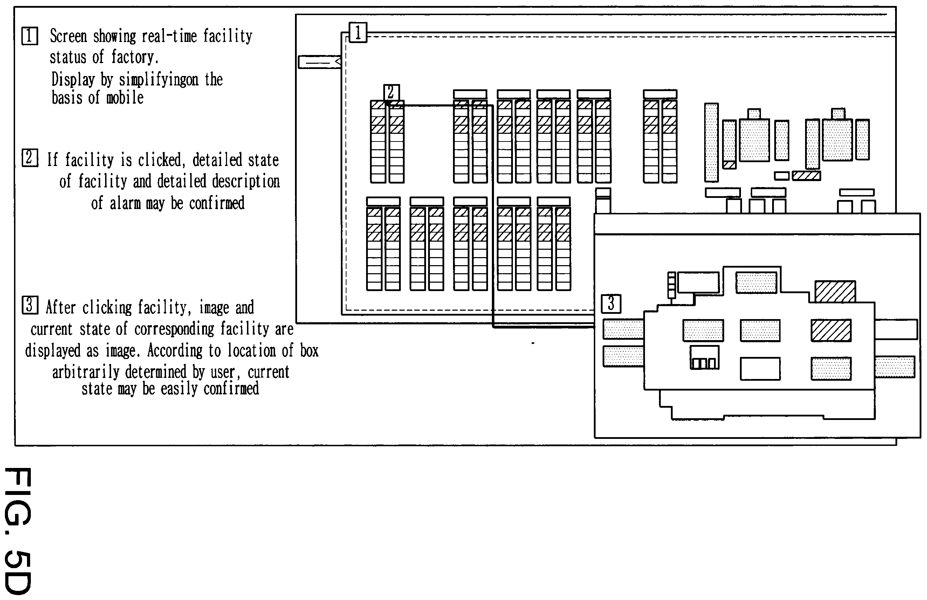

In addition, the monitoring module 22 is driven to output a real-time operation state of a factory facility, a detailed description thereof, and a detailed alarm description, as shown in FIG. 5d on the basis of PLC driving data.

In addition, the monitoring module 22 is driven to output an operation state (control preparation, normal operation, equipment standby, manual mode, tool exchange or maintenance call) of a factory facility in the form of a time-series graph, as shown in FIG. 5e on the basis of PLC driving data.

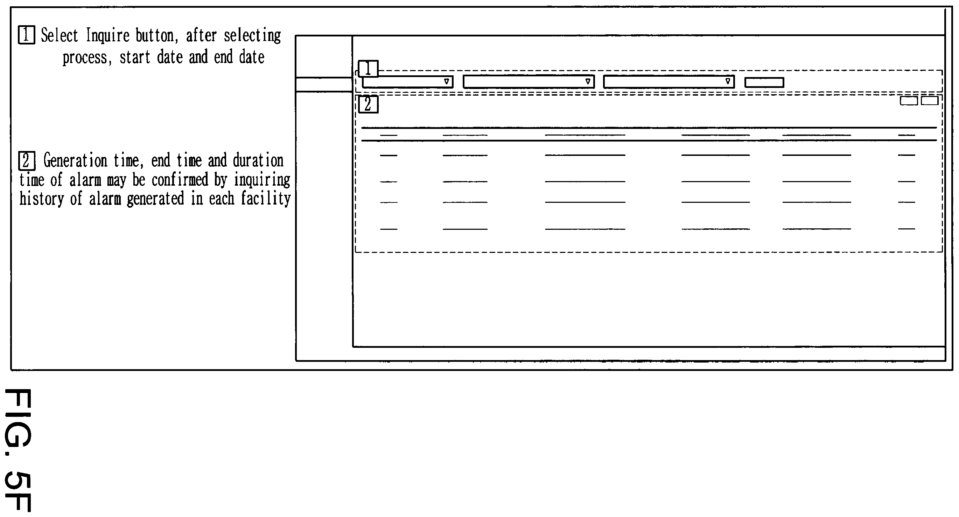

In addition, the monitoring module 22 is driven to output a start date and an end date of a process by the ID of each factory facility and output a generation time, an end time and a duration time of an alarm by the factory facility, as shown in FIG. 5f on the basis of PLC driving data.

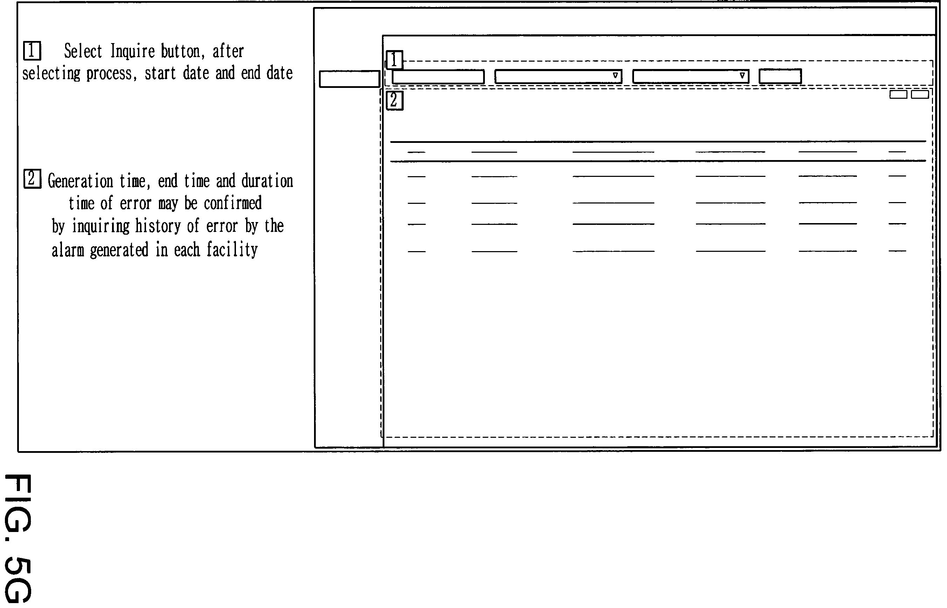

In addition, the monitoring module 22 is driven to output a start date and an end date of a process by the ID of each factory facility and output a generation time, an end time and a duration time of an error by the factory facility, as shown in FIG. 5g on the basis of PLC driving data, malfunction event information or line state event information.

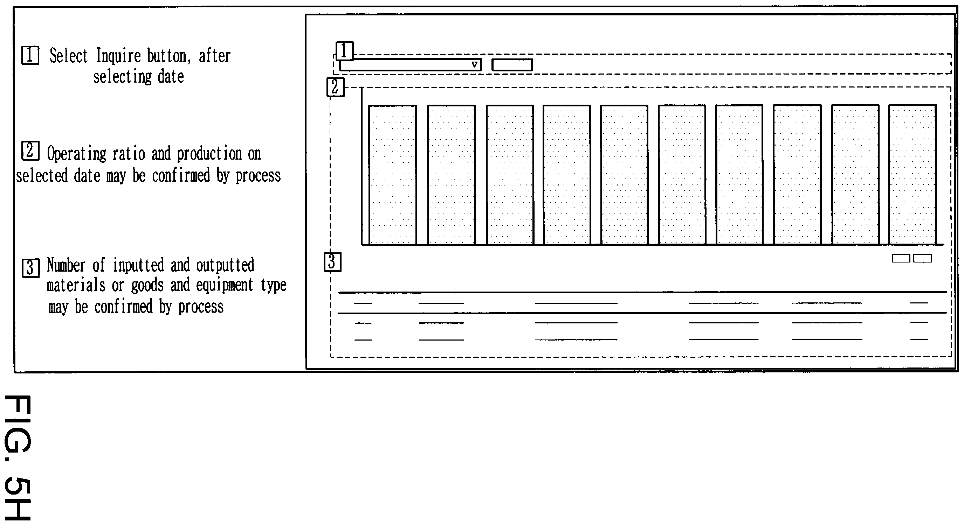

In addition, the monitoring module 22 is driven to output an operating ratio, production, the number of inputs and exported materials or goods and an equipment type of the date selected by the process according to operation of a factory facility, as shown in FIG. 5h on the basis of PLC driving data.

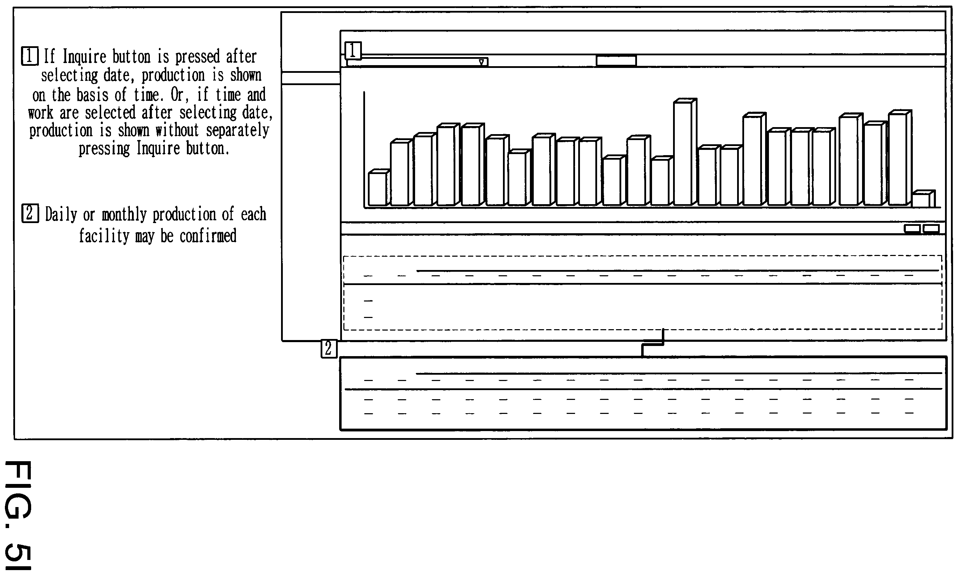

In addition, the monitoring module 22 is driven to output production according to operation of a factory facility in the form of a daily or monthly graph set in advance, as shown in FIG. 5i on the basis of PLC driving data.

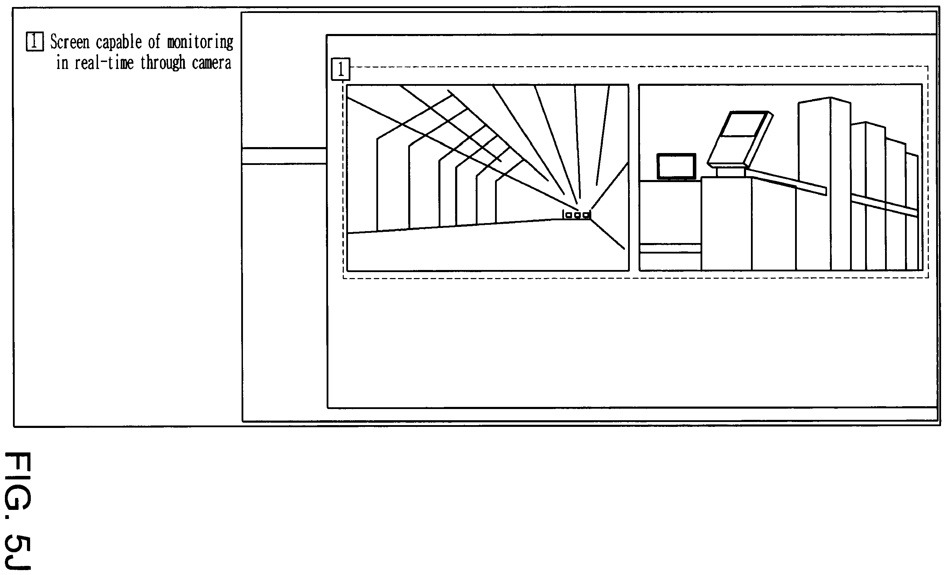

In addition, the monitoring module 22 is driven to output real-time image data received from the collection module 21, as shown in FIG. 5j on the basis of PLC driving data.

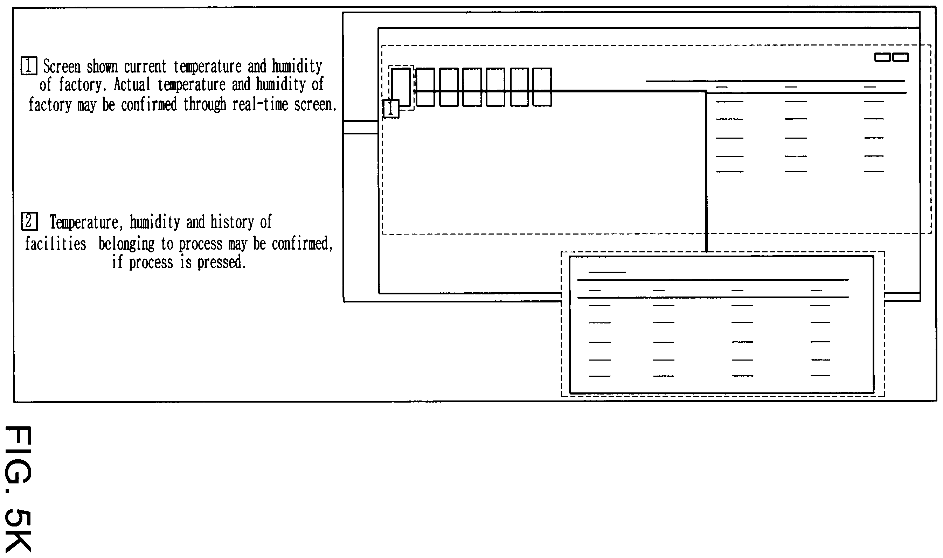

In addition, the monitoring module 22 is driven to output real-time temperature and humidity history by the ID of each factory facility on the basis of temperature/humidity data received from the collection module 21, as shown in FIG. 5k on the basis of PLC driving data.

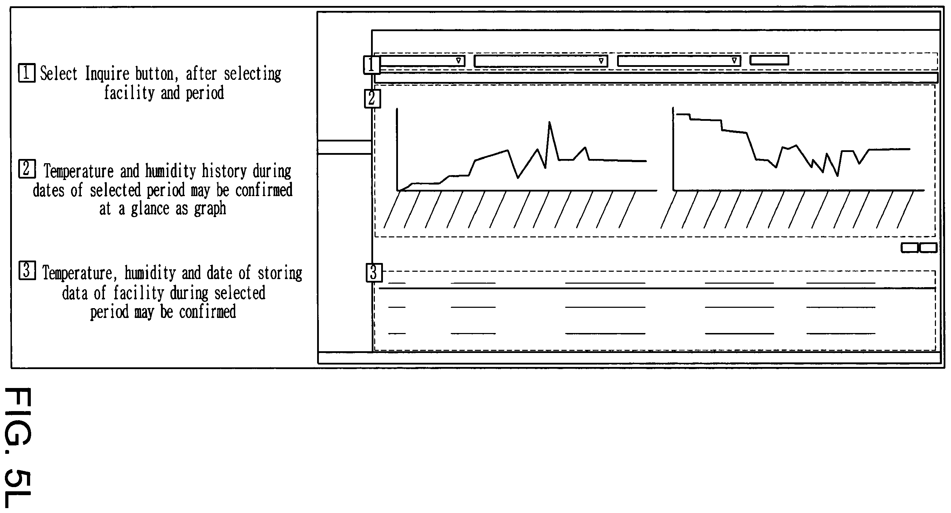

In addition, the monitoring module 22 is driven to output temperature and humidity history by the ID of each factory facility in the form of a graph by the date, as shown in FIG. 5l on the basis of temperature/humidity data received from the collection module 21.

Meanwhile, when malfunction event information or line state event information is received from the collection module 21, a control module 23 of the central control server 20 creates factory facility control information for PLC driving control including any one among interrupting an operation of a corresponding factory facility, resuming the operation of the factory facility, repeatedly executing previous processes, and skipping subsequent processes in accordance with a preset manual.

In addition, the control module 23 of the central control server 20 classifies the malfunction event information or the line state event information received from the collection module 21 by the ID and creates big data integrating the cause/frequency of event generation and maintenance history.

In addition, when the malfunction event information or the line state event information is received from the collection module 21, a search module 24 of the central control server 20 searches for location coordinates of previously registered mobile terminals 30, extracts an ID of a mobile terminal 30 located at a place nearest from the factory facility, and transmits the ID to a transmission module 25.

At this point, a previously registered mobile terminal 30 may be set as a terminal of a manager or a terminal of a maintenance worker.

In addition, the transmission module 25 of the central control server 20 transmits the PLC driving data, the real-time image data, the temperature/humidity data, the illuminance sensor data, the CO₂ sensor data and the hazardous substance data by the ID of each factory facility received from the collection module 21 to a previously registered mobile terminal 30, transmits the factory facility control information received from the control module 23 to the active black box 10, and transmits the malfunction event information or the line state event information received from the collection module 21 to a mobile terminal 30 corresponding to the ID received from the search module 24.

Meanwhile, a quality correlation deriving module 26 of the central control server 20 indexes each non-defective product rate of the products produced by a plurality of factory facilities located in the same area from a DB, compares and analyzes the indexed non-defective product rates and the illuminance sensor data and the CO₂ sensor data of the ID of each factory facility received from the collection module 21, and creates correlation deriving information, which derives an environmental factor that gives an effect to the non-defective product rate, on the basis of the illuminance sensor data and the CO₂ sensor data.

In addition, a production efficiency analysis module 27 of the central control server 20 indexes production quality data of a product produced by each factory facility from a DB, compares the indexed production quality data with the temperature/humidity data, the illuminance sensor data, the CO₂ sensor data and the hazardous substance data received from the collection module 21, and creates production efficiency analysis information which derives a factory facility, a production process and a production line having an optimum production efficiency.

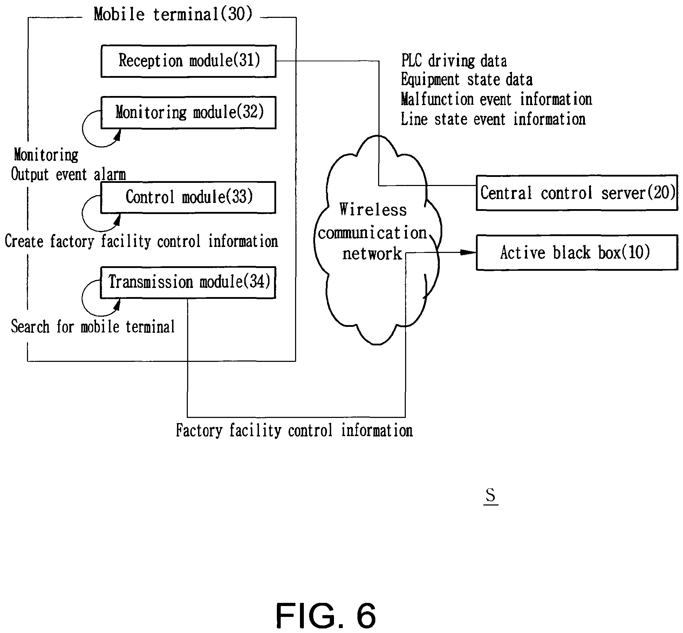

Hereinafter, the detailed configuration of a mobile terminal of a factory facility monitoring system using an active black box according to the present invention will be described with reference to FIG. 6.

First, a reception module 31 of the mobile terminal 30 receives PLC driving data, real-time image data, temperature/humidity data, illuminance sensor data, CO₂ sensor data and hazardous substance data of the ID of each factory facility from the central control server 20 and receives malfunction event information or line state event information from the central control server 20.

In addition, a monitoring module 32 of the mobile terminal 30 outputs time-series changes in the trend of the PLC driving data, the real-time image data, the temperature/humidity data, the illuminance sensor data, the CO₂ sensor data and the hazardous substance data received from the reception module 31 by the ID of each factory facility. And when the malfunction event information or the line state event information is received from the reception module 31, the monitoring module 32 outputs an event alarm for the event information..

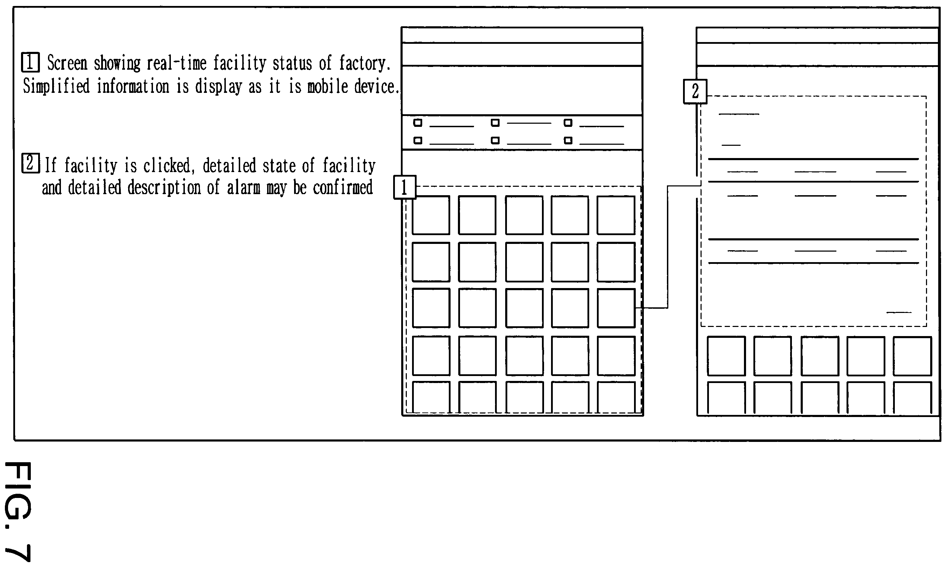

At this point, the monitoring module 32 is driven to output a real-time operation state of a factory facility, a detailed description thereof, and a detailed alarm description, as shown in FIG. 7 on the basis of PLC driving data received from the reception module 31.

In addition, when the malfunction event information or the line state event information is received from the reception module 31, a control module 33 of the mobile terminal 30 creates factory facility control information for PLC driving control including any one among interrupting an operation of a corresponding factory facility, resuming the operation of the factory facility, repeatedly executing previous processes, and skipping subsequent processes in accordance with a preset manual. At this point, the control module 33 may receive the factory facility control information through handling of a manager.

A transmission module 34 of the mobile terminal 30 transmits the factory facility control information received from the control module 33 to the active black box 10.

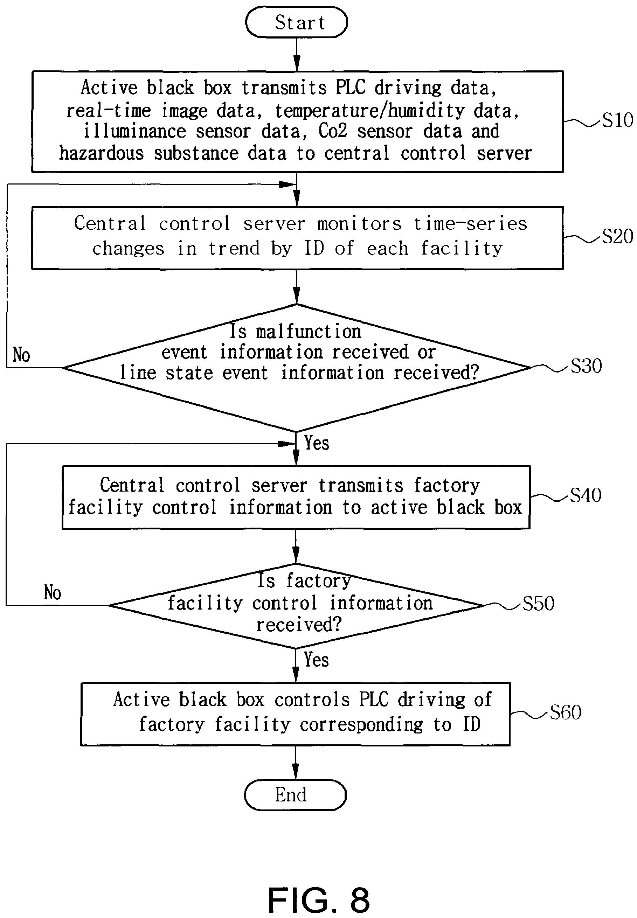

Hereinafter, a factory facility monitoring method using an active black box according to the present invention will be described with reference to FIG. 8.

First, the active black box 10 collects PLC driving data, real-time image data, temperature/humidity data, illuminance sensor data, CO₂ sensor data and hazardous substance data of a factory facility and transmits the collected data to the central control server 20 (step S10).

Subsequently, the central control server 20 receives the PLC driving data, the real-time image data, the temperature/humidity data, the illuminance sensor data, the CO₂ sensor data and the hazardous substance data, and monitors time-series changes in the trend of data by the ID of each factory facility (step S20).

Subsequently, it is determined whether the central control server 20 receives malfunction event information or line state event information from the active black box 10 (step S30).

If it is determined that the malfunction event information or the line state event information is received as a result of the determination at step S30, the central control server 20 indexes a preset manual and transmits factory facility control information corresponding to the received malfunction event information or line state event information to the active black box 10 (step S40).

Subsequently, it is determined whether the active black box 10 receives the factory facility control information including an ID from the central control server 20 (step S50).

If it is determined that the factory facility control information including an ID is received from the central control server 20 as a result of the determination at step S50, the active black box 10 controls PLC driving of a factory facility corresponding to the ID (step S60).

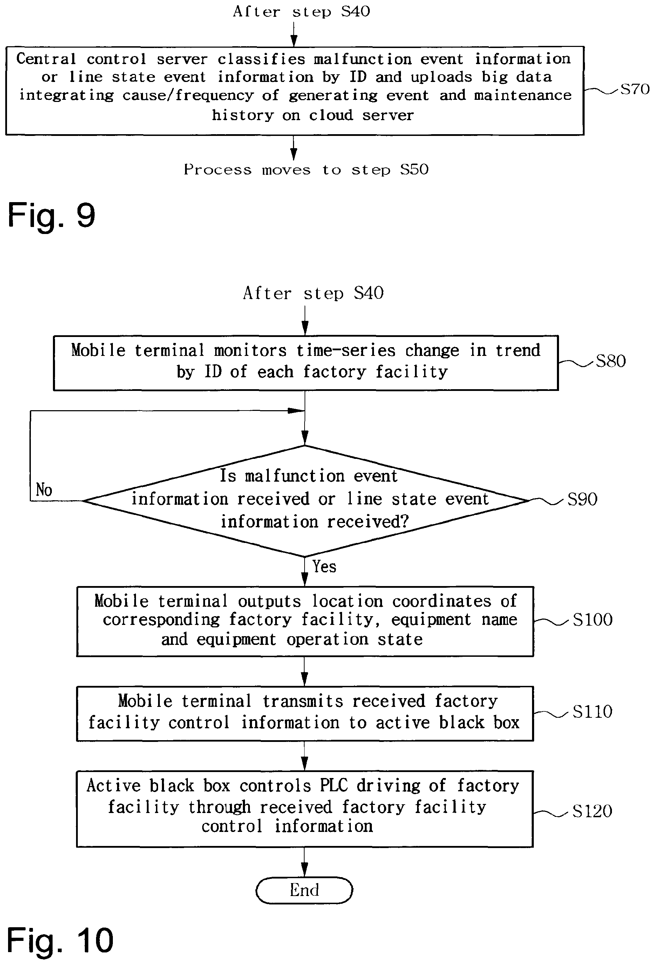

Hereinafter, a process performed after step S40 of a factory facility monitoring method using an active black box according to the present invention will be described with reference to FIG. 9.

After step S40, the central control server 20 classifies the malfunction event information or the line state event information by the ID, creates big data integrating the cause/frequency of event generation and maintenance history, and uploads the big data on the cloud server 40, and the process moves to step S50 (step S70).

Hereinafter, another process performed after step S40 of a factory facility monitoring method using an active black box according to the present invention will be described with reference to FIG. 10.

After step S40, the mobile terminal 30 receives the PLC driving data, the real-time image data, the temperature/humidity data, the illuminance sensor data, the CO₂ sensor data and the hazardous substance data of the ID of each factory facility from the central control server 20 and monitors time-series changes in the trend of the data (step S80).

Subsequently, it is determined whether the mobile terminal 30 receives the malfunction event information or the line state event information from the central control server 20 (step S90).

If it is determined that the malfunction event information or the line state event information is received as a result of the determination at step S90, the mobile terminal 30 outputs location coordinates of the factory facility, an equipment name and an equipment operating state corresponding to the received malfunction event information or line state event information (step S100).

Subsequently, the mobile terminal 30 transmits the factory facility control information received from the manager to the active black box 10 (step S110).

Then, the active black box 10 receives the factory facility control information for each ID from the mobile terminal 30 and controls PLC driving of the factory facility (step S120).

In the above description, 'index' may include the meaning of the search. Also, the factory facility may be a factory control unit that includes all factory electrical components for the automation systems and the manual systems. The factory control unit can include devices such as sensors, actuators, drives, CNC(Computerized Numerical Control), PLC(Programmable Logic Controller), DCS(Distributed Control System), PCS(Process Computer System), HMI(Human-Machine Interface) and SCADA(Supervisory Control And Data Acquisition).

Although it has been described and shown in relation to the preferred embodiments for illustrating the spirit of the present invention, the present invention is not limited only to the configurations and actions as shown and described like this, and those skilled in the art may easily understand that a plurality of modifications and changes can be made on the present invention without departing from the scope and spirit of the present invention. Accordingly, all proper modifications and changes and equivalents thereof should be regarded as falling within the scope of the present invention.

### Industrial Applicability:

A central control server monitors an operation situation of a factory facility in real-time through a data received from an active black box provided in the factory facility (confirms general working information and statistics of machines (machine states, production, alarm information and tool information)), i.e., confirms images of equipment and inside of a factory in real-time, confirms the status and trends in the changes of temperature and humidity, and monitors air quality, and as the central control server monitoring the situation remotely controls the factory facility, the present invention contributes to factory automation.

## Claims

1. A factory facility monitoring system using an active black box, the system comprising:
the active black box for collecting PLC driving data of a factory facility, collecting real-time image data from a CCTV connected to photograph an operation state of the factory facility, collecting temperature/humidity data, illuminance sensor data and CO₂ sensor data of the factory facility from a temperature/humidity sensor, an illuminance sensor and a CO₂ sensor and transmitting the collected data to a central control server, and controlling PLC driving of a factory facility corresponding to an ID when factory facility control information including the ID is received from the central control server or a mobile terminal;
the central control server for receiving the PLC driving data, the real-time image data, the temperature/ humidity data, the illuminance sensor data, the CO₂ sensor data and hazardous substance data, and monitoring time-series changes in the trend of the data by the ID of each factory facility, wherein when malfunction event information or line state event information is received from the active black box, the central control server indexes a preset manual and transmits factory facility control information corresponding to the received malfunction event information or line state event information to the active black box; and
a mobile terminal for receiving the PLC driving data, the real-time image data, the temperature/humidity data, the illuminance sensor data, the CO₂ sensor data and the hazardous substance data of the ID of each factory facility from the central control server, and monitoring time-series changes in the trend of the data, wherein when the malfunction event information or the line state event information is received, the mobile terminal outputs location coordinates of a factory facility, an equipment name and an equipment operating state corresponding to the information and transmits factory facility control information received from a manager to the active black box.

2. The system according to claim 1, wherein the central control server classifies the malfunction event information or the line state event information received from the active black box by the ID, creates big data integrating a cause/frequency of event generation and maintenance history, and uploads the big data on a cloud server.

3. The system according to claim 1, further comprising a cloud server for managing a response manual according to big data received from the central control server and generation of an event and allowing utilization of the collected big data for maintenance of the factory facility by sharing the big data with a maintenance company server.

4. The system according to claim 1, wherein the active black box includes:
the temperature/humidity sensor for collecting real-time temperature/humidity data of the factory facility;
a gas sensor for collecting the hazardous substance data including any one among smog, methane and carbon mono-oxide discharged by operation of the factory facility; and
a line sensor for transmitting, when it is sensed that a driving path of the factory facility or a product manufactured by the factory facility deviates from a preset line, line state event information including an ID corresponding to the line to the central control sensor or the mobile terminal.

5. The system according to claim 4, wherein the active black box further includes:
the illuminance sensor for collecting the illuminance sensor data integrating illuminance values of lights provided inside the factory facility or in a transfer path of the product; and
the CO₂ sensor for collecting the CO₂ sensor data integrating CO₂ values generated when the factory facility operates.

6. The system according to claim 1, wherein the central control server includes:
a collection module for receiving the PLC driving data, the real-time image data, the temperature/humidity data, the illuminance sensor data, the CO₂ sensor data and the hazardous substance data of the ID of each factory facility from the active black box and storing and managing the received data, and storing and managing the malfunction event information or the line state event information received from the active black box by the ID of each factory facility;
a monitoring module for outputting time-series changes in the trend of the PLC driving data, the real-time image data, the temperature/humidity data, the illuminance sensor data, the CO₂ sensor data and the hazardous substance data received from the collection module by the ID of each factory facility, and outputting an event alarm and transmitting to a preset mobile terminal, when the malfunction event information or the line state event information is received from the collection module;
a control module for creating, when the malfunction event information or the line state event information is received from the collection module, factory facility control information for PLC driving control including any one among interrupting an operation of a corresponding factory facility, resuming the operation of the factory facility, repeatedly executing previous processes, and skipping subsequent processes in accordance with the preset manual;
a search module for searching for, when the malfunction event information or the line state event information is received from the collection module, location coordinates of previously registered mobile terminals, and extracting an ID of a mobile terminal located at a place nearest from the factory facility; and
a transmission module for transmitting the PLC driving data, the real-time image data, the temperature/humidity data, the illuminance sensor data, the CO₂ sensor data and the hazardous substance data by the ID of each factory facility received from the collection module to a previously registered mobile terminal, transmitting the factory facility control information received from the control module to the active black box, and transmitting the malfunction event information or the line state event information received from the collection module to a mobile terminal corresponding to the ID received from the search module.

7. The system according to claim 6, wherein the central control server further includes:
a quality correlation deriving module for indexing each non-defective product rate of products produced by a plurality of factory facilities located in the same area from a DB, comparing and analyzing the indexed non-defective product rates and the illuminance sensor data and the CO₂ sensor data of the ID of each factory facility received from the collection module, and creating correlation deriving information, which derives an environmental factor that gives an effect to the non-defective product rate, on the basis of the illuminance sensor data and the CO₂ sensor data; and
a production efficiency analysis module for indexing production quality data of a product produced by each factory facility from a DB, comparing the indexing production quality data with the temperature/humidity data, the illuminance sensor data, the CO₂ sensor data and the hazardous substance data received from the collection module, and creating production efficiency analysis information which derives a factory facility, a production process and a production line having an optimum production efficiency.

8. The system according to claim 1, wherein the mobile terminal includes:
a reception module for receiving the PLC driving data, the real-time image data, the temperature/humidity data, the illuminance sensor data, the CO₂ sensor data and the hazardous substance data of the ID of each factory facility from the central control server, and receiving the malfunction event information or the line state event information from the central control server;
a monitoring module for outputting time-series changes in the trend of the PLC driving data, the real-time image data, the temperature/humidity data, the illuminance sensor data, the CO₂ sensor data and the hazardous substance data received from the reception module by the ID of each factory facility, and outputting an event alarm when the malfunction event information or the line state event information is received from the reception module;
a control module for creating, when the malfunction event information or the line state event information is received from the reception module, factory facility control information for PLC driving control including any one among interrupting an operation of a corresponding factory facility, resuming the operation of the factory facility, repeatedly executing previous processes, and skipping subsequent processes in accordance with the preset manual; and
a transmission module for transmitting the factory facility control information received from the control module to the active black box.

9. A factory facility monitoring method using an active black box, the method comprising the steps of:
(a) collecting PLC driving data, real-time image data, temperature/humidity data, illuminance sensor data, Co2 sensor data and hazardous substance data of a factory facility, and transmitting the collected data to a central control server, by the active black box;
(b) receiving the PLC driving data, the real-time image data, the temperature/humidity data, the illuminance sensor data, the CO₂ sensor data and the hazardous substance data, and monitoring time-series changes in the trend of the data by the ID of each factory facility, by the central control server;
(c) determining whether the central control server receives malfunction event information or line state event information from the active black box;
(d) indexing, if it is determined that the malfunction event information or the line state event information is received as a result of the determination at step (c), a preset manual and transmitting factory facility control information corresponding to the received malfunction event information or line state event information to the active black box, by the central control server;
(e) determining whether the active black box receives the factory facility control information including an ID from the central control server; and
(f) controlling, if it is determined that the factory facility control information including an ID is received from the central control server 20 as a result of the determination at step (e), PLC driving of a factory facility corresponding to the ID, by the active black box.

10. The method according to claim 9, further comprising, after step (d), the step of (g) classifying the malfunction event information or the line state event information by the ID, creating big data integrating a cause/frequency of event generation and maintenance history, and uploading the big data on a cloud server, by the central control server.

11. The method according to claim 9, further comprising, after step (d), the steps of:
(h) receiving the PLC driving data, the real-time image data, the temperature/humidity data, the illuminance sensor data, the CO₂ sensor data and the hazardous substance data of the ID of each factory facility from the central control server, and monitoring time-series changes in the trend of the data, by the mobile terminal;
(i) determining whether the mobile terminal receives the malfunction event information or the line state event information from the central control server;
(j) outputting, if it is determined that the malfunction event information or the line state event information is received as a result of the determination at step (i), location coordinates of the factory facility, an equipment name and an equipment operating state corresponding to the received malfunction event information or line state event information, by the mobile terminal;
(k) transmitting factory facility control information received from a manager to the active black box, by the mobile terminal; and
(1) receiving the factory facility control information from the mobile terminal, and controlling PLC driving of the factory facility, by the active black box.
